# EUROPEAN PATENT APPLICATION

(11) **EP 4 471 929 A1**
(43) Date of publication of application: **04.12.2024**
(21) Application number: 23818760.3
(22) Date of filing: 28.02.2023
(51) Int. Cl.: H01M 10/0587, H01M 10/05

(54) **WINDING BATTERY AND ELECTRONIC DEVICE**

(30) Priority: 10.06.2022 CN 202221445672 U
(71) Applicant: Zhuhai CosMX Battery Co., Ltd., Zhuhai, Guangdong 519180 (CN)
(72) Inventor: ZHANG, Baohai, Zhuhai, Guangdong 519180 (CN); PENG, Chong, Zhuhai, Guangdong 519180 (CN); LI, Junyi, Zhuhai, Guangdong 519180 (CN)
(74) Representative: Murgitroyd & Company
(86) International application number: PCT/CN2023/078740
(87) International publication number: WO 2023/236592

(57) **Abstract**

The present application provides a winding battery and an electronic device. According to a first aspect, the present application provides the winding battery, which includes a positive electrode plate and a negative electrode plate which are formed by winding, the positive electrode plate includes a positive electrode current collector and a first coating layer, and the negative electrode plate includes a negative electrode current collector and a negative electrode active layer. The first coating layer includes a first insulating adhesive layer and a positive electrode active layer, the positive electrode active layer is disposed on a surface of the positive electrode current collector, the first insulating adhesive layer is connected to the positive electrode active layer, and at least one cross section of the first insulating adhesive layer and an end surface, close to a winding start point, of the negative electrode active layer are located in a same plane. According to the winding battery provided by the present application, the first insulating adhesive layer is provided, so that on a basis that a negative electrode exceeds a positive electrode, a gap between negative electrode plates at the winding start point is compensated, and a risk of deformation of the negative electrode plate is reduced, thereby alleviating a problem of uneven stress of a battery cell in a cycle expansion process, and improving a service life of the battery.

## Description

### CROSS-REFERENCE TO RELATED APPLICATIONS

The present application claims priority to Chinese Patent Application No. 202221445672.X, filed on June 10, 2022, and entitled "WINDING BATTERY AND ELECTRONIC DEVICE", which is incorporated herein by reference in its entirety.

### TECHNICAL FIELD

The present application relates to a winding battery and an electronic device, and relates to the field of secondary battery technologies.

### BACKGROUND

With the advent of the 5G era and the rapid development of secondary batteries, people have put forward higher requirements on energy density, fast charging capability and charging and discharging rate of the secondary batteries, and fast charging batteries are also a development trend of consumer secondary batteries. With the improvement of consumers' requirements for the energy density and the fast charging capability of the secondary batteries, in order to prevent lithium precipitation at an edge of a negative electrode plate, a negative electrode needs to exceed a positive electrode by 3mm to 5mm, but such a structure causes a gap between negative electrode plates, and the negative electrode plates are easy to deform. A pressure borne by deformed electrode plates in a battery formation process is not uniform, which leads to poor interface adhesion and poor surface flatness of the electrode plates. In a long cycle process, an expansion deformation of a battery is happened due to a flatness problem, thereby causing problems of capacity attenuation and expansion failure, and affecting a service life of the battery.

### SUMMARY

The present application provides a winding battery, which is configured to solve a problem of poor service life of a battery caused by a gap between negative electrode plates.

The present application further provides an electronic device, which includes the foregoing winding battery.

According to a first aspect, the present application provides a winding battery, which includes a positive electrode plate and a negative electrode plate which are formed by winding, the positive electrode plate includes a positive electrode current collector and a first coating layer disposed on a surface of the positive electrode current collector, and the negative electrode plate includes a negative electrode current collector and a negative electrode active layer disposed on a surface of the negative electrode current collector; and

the first coating layer includes a first insulating adhesive layer and a positive electrode active layer, the positive electrode active layer is disposed on the surface of the positive electrode current collector, the first insulating adhesive layer is connected to the positive electrode active layer, and at least one cross section of the first insulating adhesive layer and an end surface, close to a winding start point, of the negative electrode active layer are located in a same plane.

In a specific embodiment, the first insulating adhesive layer includes a first region and a second region that are connected to each other, the first region is disposed on a surface, away from the positive electrode current collector, of the positive electrode active layer, and the second region is disposed on a side, close to the winding start point, of the positive electrode active layer and disposed on the surface of the positive electrode current collector.

In a specific embodiment, a thickness of the first region is same as a thickness of the second region, and the thickness of the first region and the thickness of the second region are 4 µm to 16 µm.

In a specific embodiment, the first insulating adhesive layer includes a first region and a second region that are connected to each other, the first region and the second region are both disposed on the surface of the positive electrode current collector, the first region is connected to the positive electrode active layer, an end surface, close to the winding start point, of the first region and the end surface, close to the winding start point, of the negative electrode active layer are located in a same plane, and the second region is located at a side, close to the winding start point, of the first region.

In a specific embodiment, a thickness of the first region is 1.03 to 1.08 times a thickness of the positive electrode active layer, and a thickness of the second region is 4 µm to 16 µm.

In a specific embodiment, a length of the first region is 3mm to 5mm.

In a specific embodiment, a thickness of the first insulating adhesive layer disposed on a surface, close to a winding center, of the positive electrode current collector is T1, and a thickness of the first insulating adhesive layer disposed on a surface, away from the winding center, of the positive electrode current collector is T2. T1=T2, or (T2-T1) =2 µm to 5 µm.

In a specific embodiment, the positive electrode current collector includes a coating region and a foil uncoating region, the coating region is configured to dispose the first coating layer, and the foil uncoating region is located at a side, close to a winding center, of the coating region.

In a specific embodiment, a surface, close to the winding center, of the negative electrode plate is provided with a second insulating adhesive layer, and in a length direction of the winding battery, a vertical projection of an end region, close to the winding start point, of the positive electrode current collector at least partially overlaps with a vertical projection of the second insulating adhesive layer.

In a specific embodiment, the first insulating adhesive layer includes a first region and a second region, the first region is located on a surface, away from the positive electrode current collector, of the positive electrode active layer, and the second region is connected to the first region and wraps an end surface, close to the winding start point, of the positive electrode active layer.

In a specific embodiment, the winding battery further includes a positive electrode tab disposed on the surface of the positive electrode current collector and a negative electrode tab disposed on the surface of the negative electrode current collector, and in a length direction of the winding battery, a vertical projection of the positive electrode tab and the negative electrode tab does not overlap with a vertical projection of the first insulating adhesive layer.

In a specific embodiment, a width of the first insulating adhesive layer is greater than or equal to a width of the positive electrode active layer.

According to a second aspect, the present application provides an electronic device, which includes the winding battery according to any one of the foregoing embodiments.

According to the winding battery provided in the present application, the first insulating adhesive layer is provided, so that on a basis that a negative electrode exceeds a positive electrode, a gap between negative electrode plates at the winding start point is compensated, and a risk of deformation of the negative electrode plate is reduced, thereby alleviating a problem of uneven stress of a battery in a cycle process, alleviating problems of expansion deformation and capacity attenuation of the battery, and improving a service life of the battery.

### BRIEF DESCRIPTION OF THE DRAWINGS

In order to more clearly illustrate embodiments of the present application or technical solutions in a related art, the accompanying drawings required in description of the embodiments or the related art are briefly introduced below. Obviously, the accompanying drawings in the following description are some embodiments of the present application, and for a person of ordinary skill in the art, other drawings may also be obtained according to the accompanying drawings without creative efforts.
FIG. 1 is a schematic structural diagram of a winding battery according to the prior art.
FIG. 2 is a partial enlarged schematic diagram of a winding battery according to an embodiment of the present application.
FIG. 3 is a schematic structural diagram of an electrode plate after straightening according to an embodiment of the present application.
FIG. 4 is a partial enlarged schematic diagram of a winding battery according to an embodiment of the present application.
FIG. 5 is a schematic structural diagram of an electrode plate after straightening according to an embodiment of the present application.
FIG. 6 is a schematic structural diagram of an insulating adhesive layer according to an embodiment of the present application.
FIG. 7 is a schematic structural diagram of an insulating adhesive layer according to an embodiment of the present application.
FIG. 8 is a partial enlarged schematic diagram of a winding battery according to an embodiment of the present application.
FIG. 9 is a schematic structural diagram of an electrode plate after straightening according to an embodiment of the present application.
FIG. 10 is a partial enlarged schematic diagram of a winding battery according to an embodiment of the present application.
FIG. 11 is a partial enlarged schematic diagram of a winding battery according to an embodiment of the present application.
FIG. 12 is a schematic structural diagram of a winding battery according to an embodiment of the present application.

### Brief description of reference numerals in the accompanying drawings:

101-positive electrode current collector;
102-positive electrode active layer;
103-first insulating adhesive layer;
1031-substrate layer;
1032-adhesive layer;
201-negative electrode current collector;
202-negative electrode active layer;
203-second insulating adhesive layer;
300-positive electrode tab; and
400-negative electrode tab.

### DETAILED DESCRIPTION OF THE EMBODIMENTS

In order to make objectives, technical solutions, and advantages of the present application clearer, in the following, the technical solutions in the embodiments of the present application are clearly and completely described with reference to the embodiments of the present application. Obviously, the described embodiments are just a part but not all of the embodiments of the present application. All other embodiments obtained by a person of ordinary skill in the art based on the embodiments of the present application without creative efforts shall fall within the protection scope of the present application.

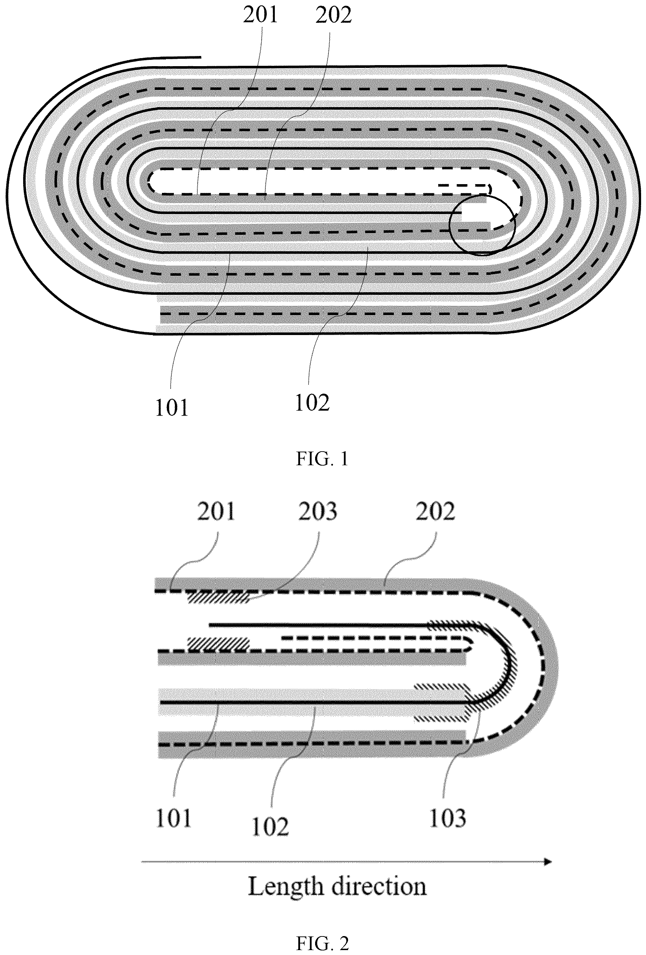

FIG. 1 is a schematic structural diagram of a winding battery according to the prior art, and as shown in FIG. 1, a winding battery includes a positive electrode plate, a negative electrode plate, a separator, and an electrolyte solution. The positive electrode plate, the separator (not shown), and the negative electrode plate are sequentially stacked and then wound from inside to outside to form a battery cell. The positive electrode plate includes a positive electrode current collector 101 and a positive electrode active layer 102 disposed on a surface of the positive electrode current collector 101, and the positive electrode active layer 102 includes a positive electrode active material. The negative electrode plate includes a negative electrode current collector 201 and a negative electrode active layer 202 disposed on a surface of the negative electrode current collector 201, and the negative electrode active layer 202 includes a negative electrode active material. An electrochemical reaction between the positive electrode active material and the negative electrode active material provides a capacity for the battery, the separator is located between the positive electrode plate and the negative electrode plate, and is configured to isolate the positive electrode plate and the negative electrode plate from being short-circuited due to contact, and the battery cell is immersed in the electrolyte solution and packaged to obtain the winding battery.

A lithium ion battery is taken as an example, when an external power supply charges the lithium ion battery, lithium ions are extracted from the positive electrode active material, and the lithium ions are inserted into the negative electrode active material through a transfer of the electrolyte solution and the separator. When the negative electrode active material does not have sufficient position to receive the lithium ions, the lithium ions may precipitate on a surface of the negative electrode plate to cause lithium precipitation, and the precipitated lithium ions may form lithium dendrites, which harm a cycle performance and a safety performance of the lithium ion battery. Therefore, in a conventional battery structure, a negative electrode needs to exceed a positive electrode by 3mm to 5mm, that is, as shown in a circled part shown in FIG. 1. However, in the winding structure mentioned above, there is a gap between negative electrode plates, and the negative electrode plates are easy to deform. A pressure borne by deformed electrode plates in a battery formation process is not uniform, which leads to poor interface adhesion and poor surface flatness of the electrode plates. In a long cycle process, an expansion deformation of a battery is happened due to a flatness problem, thereby causing problems of capacity attenuation and expansion failure, and affecting a service life of the battery.

In order to resolve the problems mentioned above, the present application provides a winding battery, which includes a positive electrode plate and a negative electrode plate that are formed by winding, the positive electrode plate includes a positive electrode current collector and a first coating layer disposed on a surface of the positive electrode current collector, and the negative electrode plate includes a negative electrode current collector and a negative electrode active layer disposed on a surface of the negative electrode current collector.

The first coating layer includes a first insulating adhesive layer and a positive electrode active layer, the positive electrode active layer is disposed on the surface of the positive electrode current collector, the first insulating adhesive layer is connected to the positive electrode active layer, and at least one cross section of the first insulating adhesive layer and an end surface, close to a winding start point, of the negative electrode active layer are located in a same plane.

In the present application, one end of an electrode plate is used as a winding start point and the electrode plate is formed by winding from inside to outside according to a winding manner of the positive electrode plate and the negative electrode plate, that is, the winding start point is located inside a battery cell. The cross section of the first insulating adhesive layer refers to a plane exposed by cutting the first insulating adhesive layer in a direction perpendicular to the positive electrode current collector, and the end surface, close to a winding start point, of the negative electrode active layer refers to a side surface, close to the winding start point, in two end surfaces formed by a width direction and a thickness direction of the negative electrode active layer, that is, the side surface located at one end of an interior of the battery cell. The above two planes located in a same plane refer to that the two planes are flush and can be located in one plane at a same time. With continued reference to FIG. 1, since a winding start point of a negative electrode active layer 202 disposed on an upper surface of the negative electrode current collector 201, is different from a winding start point of a negative electrode active layer 202 disposed on a lower surface of the negative electrode current collector 201, the end surface, close to a winding start point, of the negative electrode active layer 202 includes an end surface, close to a winding start point, of the negative electrode active layer disposed on the upper surface of the negative electrode current collector 201 and an end surface, close to a winding start point, of the negative electrode active layer disposed on the lower surface of the negative electrode current collector 201. The end surface referred in the present application refers to one or two of the foregoing two end surfaces. In the present application, the first insulating adhesive layer is provided, so that on a basis that a negative electrode exceeds a positive electrode, a gap between negative electrode plates at the winding start point is compensated, and a risk of deformation of the negative electrode plate is reduced, thereby alleviating a problem of uneven stress of a battery cell in a cycle expansion process, alleviating problems of expansion deformation of the battery cell and capacity attenuation of a battery, and improving a service life of the battery.

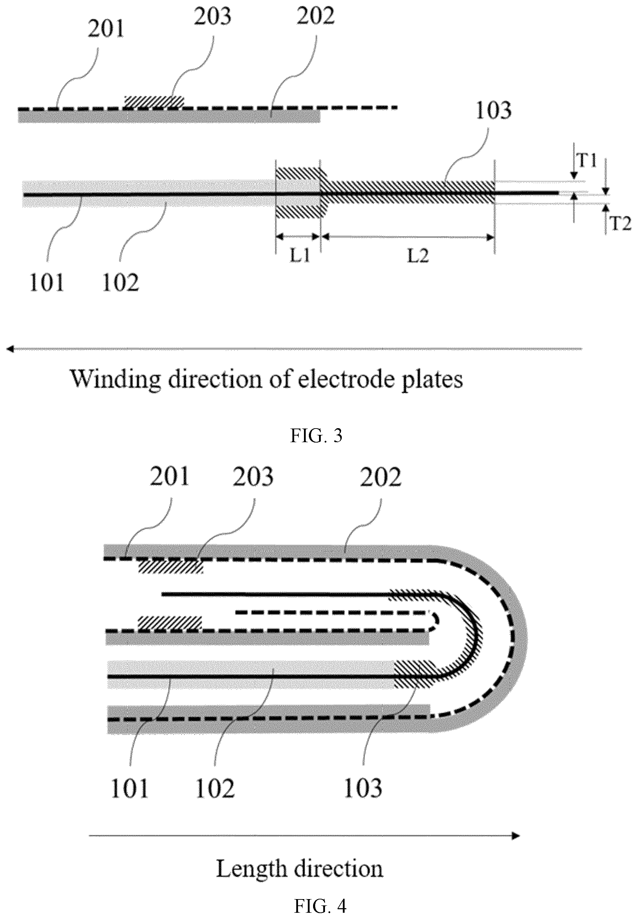

In a specific embodiment, FIG. 2 is a partial enlarged schematic diagram of a winding battery according to an embodiment of the present application, FIG. 3 is a schematic structural diagram of an electrode plate after straightening according to an embodiment of the present application, and as shown in FIGS. 2 to 3, a gap between negative electrode plates is compensated by a positive electrode active layer 102. Specifically, from one side close to the winding start point to one side away from the winding start point, a positive electrode current collector 101 sequentially includes a foil uncoating region, a coating region of a first insulating adhesive layer 103 and a coating region of the positive electrode active layer 102. A surface of the foil uncoating region is not covered with a coating layer, the coating region of the first insulating adhesive layer 103 is configured to dispose the first insulating adhesive layer 103, and the coating region of the positive electrode active layer 102 is configured to dispose the positive electrode active layer 102. A winding start point of the positive electrode active layer 102 is substantially same as a winding start point of a negative electrode active layer 202 in a vertical direction, and the gap between the negative electrode plates is compensated by the positive electrode active layer 102. At the same time, in order to make a negative electrode exceed a positive electrode, a region, close to the winding start point, of the positive electrode active layer 102 is covered with the first insulating adhesive layer 103, that is, the first insulating adhesive layer 103 includes a first region located on a surface, away from the positive electrode current collector 101, of the positive electrode active layer 102. A surface of the positive electrode active layer 102 corresponding to a negative electrode plate is covered with the first insulating adhesive layer 103, which may effectively prevent deintercalation of lithium ions during charging, and lithium intercalation cannot be realized at a corresponding position of the negative electrode plate, so that the negative electrode exceeds the positive electrode, and an effect of preventing lithium precipitation at an edge may be realized. In order to facilitate a preparation of an electrode plate and a battery cell, the first insulating adhesive layer 103 extends towards the winding start point, that is, the first insulating adhesive layer 103 further includes a second region connected to the first region, and the second region is disposed on a side, close to the winding start point, of the positive electrode active layer 102 and is located on a surface of the positive electrode current collector 101.

In a preparation process, the first insulating adhesive layer 103 may be arranged on the surface of the positive electrode current collector 101 and the surface of the positive electrode active layer 102 to obtain a positive electrode plate, the positive electrode plate, a separator and the negative electrode plate are sequentially stacked and then wound by adopting a conventional winding process, and in the winding process, the winding start point of the positive electrode active layer 102 and the winding start point of the negative electrode active layer 202 need to be controlled to be substantially same in the vertical direction.

The positive electrode current collector 101, the positive electrode active layer 102, and the negative electrode plate may all be arranged according to conventional technical methods in the art, which are not be described herein, and the first insulating adhesive layer 103 is described mainly below.

The first insulating adhesive layer 103 includes a substrate layer and an adhesive layer, and the substrate layer is one or more of a polymer layer, masking tape, and glassine paper. The polymer layer includes one or more of polyethylene, polypropylene (BOPP), polyethylene terephthalate (PET), polyvinyl chloride (PVC), polyimide, and polyurethane (PU). Further, the polymer layer includes polyethylene terephthalate (PET); the adhesive layer is a pressure-sensitive adhesive layer, which includes one or more of rubber, silica gel, acrylate, and polyurethane. Further, the adhesive layer includes a rubber pressure-sensitive adhesive.

In order to facilitate a preparation of the first insulating adhesive layer 103, a thickness of the first region is the same as a thickness of the second region, and specifically may be 4 µm to 16 µm, where a thickness of the substrate layer may be 2 µm to 12 µm, and a thickness of the adhesive layer may be 2 µm to 14 µm.

The first region is used to satisfy that the negative electrode exceeds the positive electrode, and a length L1 of the first region is 3mm to 5mm. A width of the first insulating adhesive layer 103 may be the same as a width of the positive electrode active layer 102, or may be slightly greater than the width of the positive electrode active layer 102.

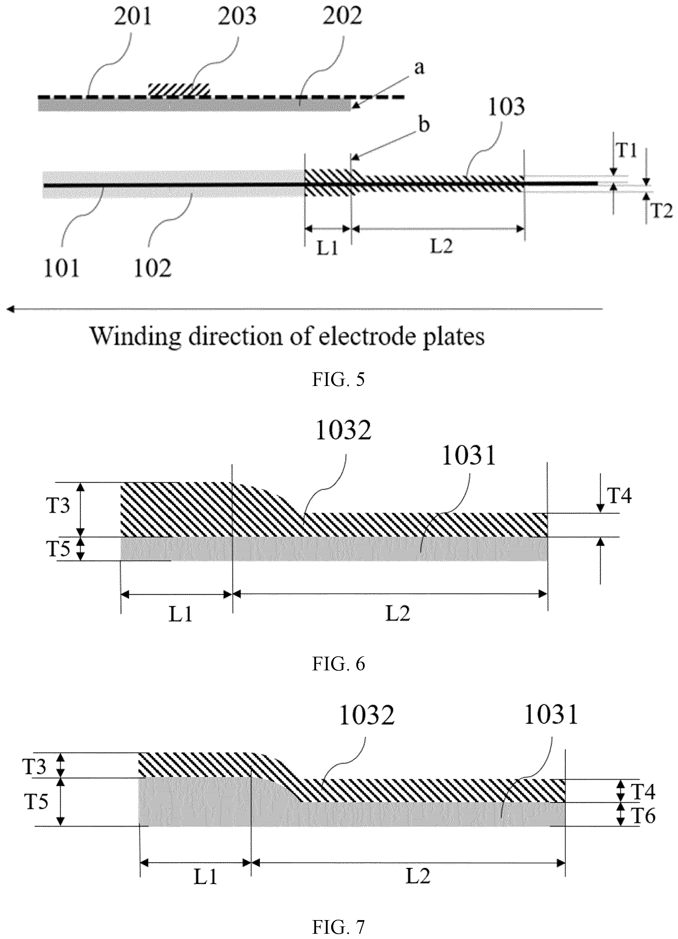

In another specific embodiment, FIG. 4 is a partial enlarged schematic diagram of a winding battery according to an embodiment of the present application, FIG. 5 is a schematic structural diagram of an electrode plate after straightening according to an embodiment of the present application, and as shown in FIGS. 4 to 5, in the embodiment, a gap between negative electrode plates is compensated by a first insulating adhesive layer 103. Specifically, from one side close to the winding start point to one side away from the winding start point, the positive electrode current collector 101 sequentially includes a foil uncoating region, a coating region of the first insulating adhesive layer 103 , and a coating region of a positive electrode active layer 102. A surface of the foil uncoating region is not covered with a coating layer, the coating region of the first insulating adhesive layer 103 is configured to dispose the first insulating adhesive layer 103, and the coating region of the positive electrode active layer 102 is configured to dispose the positive electrode active layer 102. The first insulating adhesive layer 103 includes a first region and a second region connected to each other, and the first region and the second region are both located on a surface of the positive electrode current collector 101. The first region is connected to the positive electrode active layer 102, an end surface b, close to the winding start point, of the first region and an end surface a of the negative electrode active layer 202 are located in a same plane, and the second region is located at a side, close to the winding start point, of the first region.

Same as the first embodiment, the length L1 of the first region is 3mm to 5mm, and the length L2 of the second region may be set according to a winding process of the electrode plate. The first insulating adhesive layer 103 also includes a substrate layer 1031 and an adhesive layer 1032, and a material and width used are same as those of the first embodiment.

Since the first region is configured to compensate a gap between negative electrode plates, and the positive electrode active layer 102 may expand in volume during a battery cycle, a thickness of the first region should be the same as a thickness of the positive electrode active layer 102 after expansion. Specifically, the thickness of the first region is 1.03 to 1.08 times the thickness of the positive electrode active layer 102, and a thickness of the second region should not be too high, otherwise, it is not conducive to winding. Specifically, the thickness of the second region is 4 µm to 16 µm.

In order to meet above thickness requirements, an axe-shaped first insulating adhesive layer 103 is provided in the embodiment. Specifically, FIG. 6 is a schematic structural diagram of an insulating adhesive layer according to an embodiment of the present application, and as shown in FIG. 6, the first insulating adhesive layer includes a substrate layer 1031 and an adhesive layer 1032, a thickness T5 of the substrate layer 1031 in the first region is the same as that in the second region, and a thickness T3 of the adhesive layer 1032 in the first region is greater than a thickness T4 of the adhesive layer 1032 in the second region. Specifically, the thickness T3 of the adhesive layer 1032 in the first region is changed according to a thickness of the positive electrode active layer 102, the thickness T4 of the adhesive layer 1032 in the second region is 2 µm to 14 µm, and the thickness T5 of the substrate layer 1031 is 2 µm to 12 µm.

FIG. 7 is a schematic structural diagram of an insulating adhesive layer according to an embodiment of the present application, and as shown in FIG. 7, the first insulating adhesive layer 103 includes a substrate layer 1031 and an adhesive layer 1032. A thickness T5 of the substrate layer 1031 in the first region is greater than a thickness T6 of the substrate layer 1031 in the second region, a thickness of the adhesive layer 1032 in the first region is the same as a thickness of the adhesive layer 1032 in the second region. Specifically, the thickness T5 of the substrate layer 1031 in the first region may be changed according to a thickness of the positive electrode active layer 102, the thickness T6 of the substrate layer 1031 in the second region is 2 µm to 14 µm, and the thickness T3 (T4) of the adhesive layer 1032 in the first region and the second region is 2 µm to 12 µm.

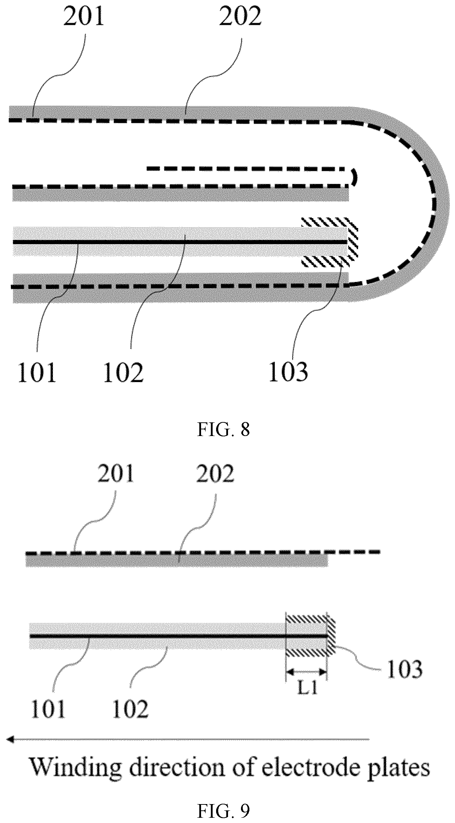

In another embodiment, FIG. 8 is a partial enlarged schematic diagram of a winding battery according to an embodiment of the present application, FIG. 9 is a schematic structural diagram of an electrode plate after straightening according to an embodiment of the present application, and as shown in FIG. 8 and FIG. 9, in the present application, a gap between negative electrode plates is compensated by a positive electrode active layer 102. Specifically, a side, close to a winding start point, of the positive electrode current collector 101 does not include a foil uncoating region, an end portion, close to a winding start point, of the positive electrode current collector 101 is flush with an end portion, close to the winding start point, of the positive electrode active layer 102, and the winding start point of the positive electrode active layer 102 and the winding start point of the negative electrode active layer 202 are substantially same in a vertical direction. A first insulating adhesive layer 103 includes a first region and a second region connected to each other, the first region is located on a surface, away from the positive electrode current collector 101, of the positive electrode active layer 102, and the second region is connected to the first region and wraps an end surface, close to the winding start point, of the positive electrode active layer 102.

In a preparation process of the embodiment, the positive electrode active layer 102 is disposed on a surface of the positive electrode current collector 101 and then cut, so that an end surface of the positive electrode current collector 101 is flush with an end surface of the positive electrode active layer 102, then the first insulating adhesive layer 103 is wrapped around an end portion, close to the winding start point, of the positive electrode plate, and both a material and a size of the first insulating adhesive layer 103 may refer to the first embodiment.

With continued reference to FIGS. 3, 5, and 9, the positive electrode current collector 101 includes an upper surface and a lower surface, which may be divided into a surface close to a winding center and a surface away from the winding center according to a winding manner of electrode plates. The winding center refers to a central point of a battery cell formed by winding, and is located inside the battery cell. All the embodiments are described by taking the first insulating adhesive layer 103 on one surface of the positive electrode current collector 101 as an example, and a thickness of the first insulating adhesive layer 103 on another surface of the positive electrode current collector 101 may be the same as or different from a thickness of the first insulating adhesive layer 103 on the one surface. Specifically, a thickness of the first insulating adhesive layer disposed on a surface, close to the winding center, of the positive electrode current collector is T1, and a thickness of the first insulating adhesive layer disposed on a surface, away from the winding center, of the positive electrode current collector is T2. When thicknesses of the first insulating adhesive layer 103 disposed on two surfaces of the positive electrode current collector are same, and T1=T2. When the thicknesses of the first insulating adhesive layers 103 disposed on the two surfaces of the positive electrode current collector are different, since bending curvature of the surface close to the winding center is relatively large, in order to prevent the first insulating adhesive layer 103 from wrinkling, the thickness T1 of the first insulating adhesive layer disposed on the surface, close to the winding center, of the positive electrode current collector should be less than the thickness T2 of the first insulating adhesive layer disposed on the surface, away from the winding center, of the positive electrode current collector, and specifically, (T2-T 1) = 2 µm to 5 µm.

With continued reference to FIG. 2 and FIG. 4, when there is a foil uncoating region in a region, close to the winding start point, of the positive electrode current collector 101, in order to prevent burrs at a head of the positive electrode current collector 101 from piercing the separator and contacting the negative electrode plate to cause a short circuit, a second insulating adhesive layer 203 is provided on a surface, close to the winding center, of the negative electrode plate. In a length direction of the winding battery, a vertical projection of an end region, close to the winding center, of the positive electrode current collector 101 at least partially overlaps with a vertical projection of the second insulating adhesive layer 203 to protect the negative electrode plate.

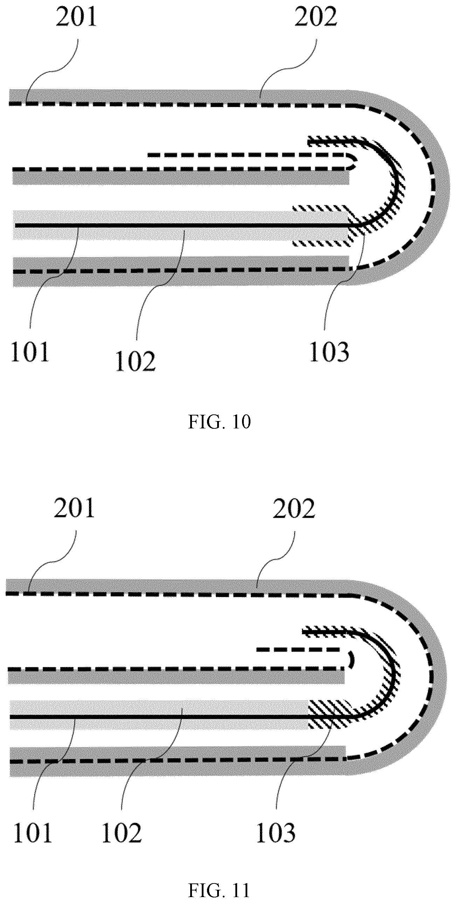

In another specific embodiment, FIG. 10 is a partial enlarged schematic diagram of a winding battery according to an embodiment of the present application, as shown in FIG. 10, a battery structure provided in this embodiment may refer to FIG. 2 and FIG. 3, and a difference lies in that a position, close to the winding start point, of a positive electrode current collector 101 does not include a foil uncoating region.

In another specific embodiment, FIG. 11 is a partial enlarged schematic diagram of a winding battery according to an embodiment of the present application, as shown in FIG. 11, a battery structure provided in this embodiment may refer to FIG. 4 and FIG. 5, a difference lies in that a position, close to the winding start point, of a positive electrode current collector 101 does not include a foil uncoating region.

The structure of the winding battery used in the present application is not limited to above embodiments, and the used structure is determined according to a design of the battery cell and the winding process.

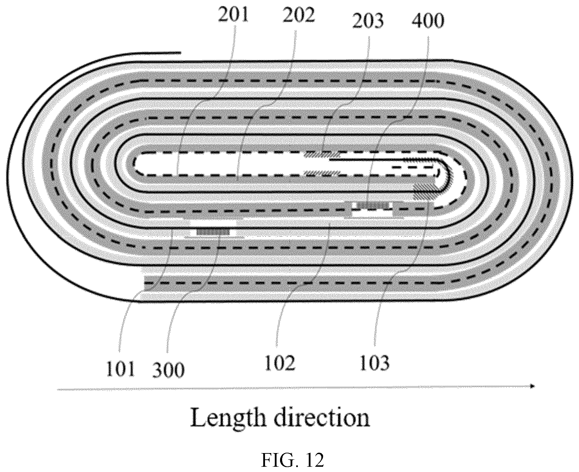

FIG. 12 is a schematic structural diagram of a winding battery according to an embodiment of the present application, as shown in FIG. 12, the winding battery further includes a positive electrode tab 300 disposed on a surface of the positive electrode current collector 101 and a negative electrode tab 400 disposed on a surface of the negative electrode current collector 201, and the positive electrode tab 300 and the negative electrode tab 400 serve as metal conductors for respectively leading out of the positive electrode and the negative electrode in the battery cell, and are contact points of the battery during charging and discharging. In a length direction of the winding battery, vertical projections of the positive electrode tab 300 and the negative electrode tab 400 does not overlap with a vertical projection of the first insulating adhesive layer 103, that is, the first insulating adhesive layer 103 does not exceed the tab, thereby avoiding increasing overall thickness of the winding battery.

When the positive electrode current collector 101 includes a foil uncoating region close to the winding center, in a length direction of the winding battery, a vertical projection of the second insulating adhesive layer 203 disposed on a surface of the negative electrode current collector does not overlap with vertical projections of the positive electrode tab 300 and the negative electrode tab 400.

According to the winding battery provided in the present application, the first insulating adhesive layer is provided, so that on a basis that a negative electrode exceeds a positive electrode, a gap between negative electrode plates at the winding start point is compensated, and a risk of deformation of the negative electrode plate is reduced, thereby alleviating a problem of uneven stress of a battery in a cycle process, alleviating problems of expansion deformation and capacity attenuation of the battery, and improving a service life of the battery.

A second aspect of the present application provides an electronic device, and the electronic device includes any one of the foregoing winding batteries.

The battery may be used as a power supply or energy storage unit for an electronic device. The device may be, but is not limited to, a mobile device (for example, a mobile phone, a tablet computer, a notebook computer, and the like.), an electric vehicle (for example, a pure electric vehicle, a hybrid electric vehicle, a plug-in hybrid electric vehicle, an electric bicycle, an electric scooter, an electric golf cart, an electric truck, and the like), and the like.

For a mobile device such as a mobile phone, a tablet computer, and a notebook computer, it is usually required to be light and thin, and a lithium-ion battery may be used as a power supply.

It should be noted that the above embodiments are only used to illustrate the technical solutions of the present application, rather than limiting the technical solutions of the present application. Although the present application is described in detail with reference to the foregoing embodiments, a person of ordinary skill in the art should understand that the technical solutions described in the foregoing embodiments may still be modified, or some or all of the technical features of the technical solutions described in the foregoing embodiments may be equivalently replaced, and these modifications or replacements do not make the essence of the corresponding technical solutions depart from the scope of the technical solutions of the embodiments of the present application.

## Claims

1. A winding battery, wherein the winding battery comprises a positive electrode plate and a negative electrode plate which are formed by winding, the positive electrode plate comprises a positive electrode current collector and a first coating layer disposed on a surface of the positive electrode current collector, and the negative electrode plate comprises a negative electrode current collector and a negative electrode active layer disposed on a surface of the negative electrode current collector; and
the first coating layer comprises a first insulating adhesive layer and a positive electrode active layer, the positive electrode active layer is disposed on the surface of the positive electrode current collector, the first insulating adhesive layer is connected to the positive electrode active layer, and at least one cross section of the first insulating adhesive layer and an end surface, close to a winding start point, of the negative electrode active layer are located in a same plane.

2. The winding battery according to claim 1, wherein the first insulating adhesive layer comprises a first region and a second region that are connected to each other, the first region is disposed on a surface, away from the positive electrode current collector, of the positive electrode active layer, and the second region is disposed on a side, close to the winding start point, of the positive electrode active layer and disposed on the surface of the positive electrode current collector.

3. The winding battery according to claim 2, wherein a thickness of the first region is same as a thickness of the second region, and the thickness of the first region and the thickness of the second region are 4 µm to 16 µm.

4. The winding battery according to claim 1, wherein the first insulating adhesive layer comprises a first region and a second region that are connected to each other, the first region and the second region are both disposed on the surface of the positive electrode current collector, the first region is connected to the positive electrode active layer, an end surface, close to the winding start point, of the first region and the end surface, close to the winding start point, of the negative electrode active layer are located in a same plane, and the second region is located at a side, close to the winding start point, of the first region.

5. The winding battery according to claim 4, wherein a thickness of the first region is 1.03 to 1.08 times a thickness of the positive electrode active layer, and a thickness of the second region is 4 µm to 16 µm.

6. The winding battery according to any one of claims 2 to 5, wherein a length of the first region is 3mm to 5mm.

7. The winding battery according to any one of claims 1 to 5, wherein a thickness of the first insulating adhesive layer disposed on a surface, close to a winding center, of the positive electrode current collector is T1, and a thickness of the first insulating adhesive layer disposed on a surface, away from the winding center, of the positive electrode current collector is T2, wherein T1 = T2, or (T2-T1) =2 µm to 5 µm.

8. The winding battery according to any one of claims 1 to 5, wherein the positive electrode current collector comprises a coating region and a foil uncoating region, the coating region is configured to dispose the first coating layer, and the foil uncoating region is located at a side, close to a winding center, of the coating region.

9. The winding battery according to claim 8, wherein a surface, close to the winding center, of the negative electrode plate is provided with a second insulating adhesive layer, and in a length direction of the winding battery, a vertical projection of an end region, close to the winding start point, of the positive electrode current collector at least partially overlaps with a vertical projection of the second insulating adhesive layer.

10. The winding battery according to claim 1, wherein the first insulating adhesive layer comprises a first region and a second region, the first region is located on a surface, away from the positive electrode current collector, of the positive electrode active layer, and the second region is connected to the first region and wraps an end surface, close to the winding start point, of the positive electrode active layer.

11. The winding battery according to claim 1, wherein the winding battery further comprises a positive electrode tab disposed on the surface of the positive electrode current collector and a negative electrode tab disposed on the surface of the negative electrode current collector, and in a length direction of the winding battery, a vertical projection of the positive electrode tab and the negative electrode tab does not overlap with a vertical projection of the first insulating adhesive layer.

12. The winding battery according to claim 1, wherein a width of the first insulating adhesive layer is greater than or equal to a width of the positive electrode active layer.

13. An electronic device, wherein the electronic device comprises the winding battery according to any one of claims 1 to 12.
